# EUROPÄISCHE PATENTSCHRIFT

(11) **EP 2 384 962 B1**
(45) Veröffentlichungstag und Bekanntmachung des Hinweises auf die Patenterteilung: **05.03.2014**
(21) Anmeldenummer: 11163034.9
(22) Anmeldetag: 19.04.2011
(51) Int. Cl.: B62M 25/06, B62M 6/45

(54) **Rücktrittgetriebe für Elektrofahrräder und Verfahren zur gesteuerten Kopplung von Abtrieb und Motor eines Elektrofahrrads**
Back-pedal drive for electric bicycles and method for controlled coupling of the drive and motor of an electric bicycle
Boîte de vitesse à retour pour vélos électriques et procédé de couplage commandé d'un entraînement et d'un moteur de vélo électrique

(30) Priorität: 06.05.2010 DE 102010028654
(43) Veröffentlichungstag der Anmeldung: 09.11.2011
(73) Patentinhaber: Robert Bosch GmbH, 70442 Stuttgart (DE)
(72) Erfinder: Kimmich, Peter, 71101, Schoenaich (DE)

(56) Entgegenhaltungen:
- FR-A- 1 283 222
- US-A- 5 845 727
- US-A- 5 967 937

## Beschreibung

Die Erfindung betrifft das Gebiet der Elektrofahrräder, wobei auf diesem Gebiet bekannt ist, Fahrräder mit Pedalantrieb mit einem zusätzlichen Elektroantrieb auszustatten. Es bestehen unterschiedliche Anordnungskonzepte für den Elektrobetrieb, wobei bei Mittelmotor-Elektrofahrräder, der Motor des Elektroantriebs unmittelbar über dem Tretlager angeordnet ist. Derartige Mittelmotor-Elektrofahrräder sind gemäß dem Stand der Technik ausschließlich mit Kettenschaltungen ausgestattet, da eine Rücktrittbremse, wie sie von Nabenschaltungen vorgesehen wird, gemäß etablierter Meinung der Fachkreise sich nicht mit einem Mittelmotor kombinieren lässt. Der Grund für diese Ausschließung von Rücktrittbremse und Mittelmotorantrieb besteht darin, dass der Motor unmittelbar mit dem Abtrieb verbunden ist und somit bei Auslösen der Rücktrittbremse der Motor sofort blockiert wird, auch wenn er sich noch in Bewegung befindet. Dieses Blockieren würde dem Motorantrieb dauerhaft schaden.

DE 44 31 804 A1 betrifft ein Fahrrad mit Rücktrittbremse, das mit einem zusätzlichen Motor ausgerüstet ist. Der Rücktritt wird durch die Kettenspannung erfasst und der Antriebsmodus wird entsprechend umgestellt; der Motor befindet sich jedoch in unmittelbar an dem Hinterrad.

Der nächtsliegende bekanntgewordene Stand der Technik ist der US5845727 zu entnehmen.

Eine elektronische Erfassung des Auslösungszeitpunkts ist aufgrund des Datenverarbeitung und der Sensoren mit einer Verzögerung behaftet, wobei sich mit einer elektronischen Erfassung und entsprechender Motorsteuerung sich auch nicht verhindern lässt, dass der Motor durch blitzartigen Blockieren einer nachlaufenden Motorwelle schaden nimmt.

Dennoch zeigen Mittelmotor-Elektrofahrräder einige Vorteile, unter anderem einen niedrigen Schwerpunkt, so dass es eine Aufgabe der Erfindung ist, eine Konstruktion aufzuzeigen, mit der sich ein Mittelmotor-Elektrofahrrad mit einer Rücktrittbremse ausstatten lässt.

### Offenbarung der Erfindung

Diese Aufgabe wird gelöst durch das Verfahren und die Vorrichtung nach einem der unabhängigen Ansprüche.

Es ist das der Erfindung zugrundeliegende Konzept, den Motorantrieb bei Mittelmotorfahrrädern durch eine mechanische Abkopplung beim Betätigen der Rücktrittbremse zu schützen, wobei die Abkopplung von einer mechanisch steuerbaren Kupplung durchgeführt wird, die mechanisch von einem Gewindetrieb angesteuert wird. Der erfindungsgemäße Gewindetriebs ist mit der Tretkurbel sowie mit dem Abtrieb verbunden, und erzeugt eine Bewegung bzw. eine Kraft, wenn die Tretkurbel entgegen der üblichen Antriebsrichtung betätigt wird (d.h. wenn die Antriebsrichtung der Tretkurbel umgekehrt wird) und somit die Drehmomentübertragung zwischen Tretkurbel und Abtrieb einen entgegengesetzten Drehsinn erhält. Mit dieser Bewegung bzw. Kraft wird die Kupplung angesteuert, die den Motor abhängig von dem Drehsinn vom Abtrieb abkoppelt, da im Falle einer Rücktrittbremsung der Abtrieb abgebremst wird, um zu verhindern, dass der Motor gegen die Rücktrittbremse arbeitet. Die Tretkurbel ist jedoch unabhängig von dem Drehsinn immer mit dem Abtrieb verbunden. Hierbei wird beispielsweise das Hinterradritzel als Abtrieb bezeichnet, da bei offenem Freilauf bekanntlich die Tretkurbel nicht der Bewegung des Hinterrads folgt.

Die Axialbewegung des Gewindetriebs wird durch eine Rotation erzeugt, vorzugsweise keine vollumfängliche, sondern eine Rotation über einen geringen Winkelbereich. Dieser Winkelbereich ist kleiner als das (Winkel-)Spiel der Tretkurbel, das bis zum tatsächlichen Auslösen der Rücktrittbremse überwunden werden muss, um zu gewährleisten, dass zunächst der Elektromotor abgekoppelt wird, bevor die Rücktrittbremse greift. Der Gewindetrieb wird von einem mit dem Abtrieb verbundenen Abtriebselement (bsp. ein Rad, ein Zahnrad oder eine Welle) gegenüber der Tretkurbelachse oder einem anderen mit der Tretkurbel verbundenen Element gedreht, wobei die Drehung auch von der Tretkurbel ausgehen kann und den Gewindetrieb gegenüber dem Abtriebselement drehen kann. Der Gewindetrieb ist drehbar mit einer Führung (bzw. einem Lager) gehalten, wobei die Führung (bzw. das Lager) schraubenlinienförmig verläuft. Der Gewindetrieb und insbesondere dessen Führung setzt daher eine Verdrehung der Führung in eine Axialverschiebung um, weshalb die Führung auch als Umsetzer bzw. als mechanischer Rotations-/Translationsumsetzer bezeichnet werden, kann.

Die Schraubenlinienform der Führung bzw. der Begriff "Gewinde" bedeutet im Kontext der Erfindung nicht notwendigerweise eine konstante Ganghöhe, solange eine Drehung möglich ist. Der Begriff Schraubenlinie bedeutet somit erfindungsgemäß (und gegebenenfalls abweichend von anderen Definitionen) eine Ortskurve, die zu einer Drehachse im Wesentlichen einen konstanten Abstand hat, und entlang der Drehachse mit zunehmendem Drehwinkel zunehmend Höhe gewinnt. Als Abhängigkeit zwischen Drehwinkel und Höhe kommt hierbei nicht nur eine lineare Abhängigkeit (entsprechend einer konstanten Ganghöhe der Schraubenform) in Frage, sondern kann auch eine allgemeine monoton steigende Abhängigkeit sein, vorzugsweise eine zumindest stückweise stetige, steigende Abhängigkeit oder insbesondere eine stückweise oder vollständig streng monoton steigende Abhängigkeit. Eine streng monoton steigende Abhängigkeit erlaubt eine kontinuierliche Führung ohne Sprünge.

Mit dieser Schraubenlinienform (oder Helixform, die konstante und nicht konstante Ganghöhen umfasst) erzeugt eine Relativdrehung zwischen Abtrieb und Tretkurbel durch die Schraubenlinienform eine axiale Translation. Als axial wird die Richtung entlang der Drehachse der Drehung bezeichnet. Die axiale Translation wird zum Entkoppeln/Koppeln des Elektromotors durch Öffnen/Schließen der Kupplung verwendet. Dieser Versatz trennt Elemente einer Kupplung voneinander oder verbindet diese, wobei die Elemente mit dem Elektromotor bzw. dem Abtrieb verbunden sind und die Kupplung eine schaltbare formschlüssige Kupplung oder eine schaltbare Reibkupplung sein kann.

Die Kupplung unterbricht somit eine Drehmomentverbindung zwischen Elektromotor und Abtrieb (bzw. zwischen Elektromotor und Tretkurbel) und wird mechanisch angesteuert von dem Drehsinn des Drehmomentunterschieds (d.h. Relativdrehmoment) zwischen Kurbelantrieb und Abtrieb beziehungsweise von dem Drehsinn des Kurbelantriebs. Die Führung kann als Aktor bzw. Sensor für den Drehsinn betrachtet werden, sowie als Umwandlungseinheit, die aus einer Drehung eine Verschiebung erzeugt. Diese Verschiebung schaltet die Kupplung, so dass der Aktor die Schaltung bzw. den Schalteingang der schaltbaren Kupplung antreibt. Die Kupplung verbindet schaltbar den Elektromotor mit dem Abtrieb (bzw. mit der Tretkurbel).

Die Erfindung wird daher realisiert durch ein Rücktrittgetriebe für Elektrofahrräder, wobei das Rücktrittgetriebe eine Motorverbindungswelle geeignet zum Anschluss an einen Elektromotor, eine Tretkurbelverbindungswelle geeignet zum Anschluss an eine Tretkurbel und ein Abtriebverbindungselement geeignet zum Anschluss an ein Laufrad umfasst. Das Abtriebverbindungselement ist insbesondere geeignet zum Anschluss an ein Zahnrad des Hinterrads, das über einen Freilauf mit dem Laufrad verbunden ist.

Das erfindungsgemäße Rücktrittgetriebe umfasst einen Gewindetrieb, der die Tretkurbelverbindungswelle umgreift, wobei der Gewindetriebs funktionell zwischen Tretkurbelverbindungswelle und Abtriebverbindungselement geschaltet bzw. vorgesehen ist. Der Gewindetrieb weist eine Führung in der Form eines Schraubenlinienabschnitts mit einer konstanten oder variablen Ganghöhe auf. Der Gewindetrieb ist eingerichtet, bei entgegengesetzten Drehmomenten zwischen Tretkurbelverbindungswelle und Abtriebverbindungselement aufgrund der Schaubenlinienform der Führung unterschiedliche Axialpositionen vorzusehen. Die Axialpositionen sind an unterschiedlichen Höhen bezogen auf die Drehachse des Gewindetriebs bzw. der Tretkurbelverbindungswelle vorgesehen. Die unterschiedlichen Höhen ergeben sich unmittelbar mit dem Drehwinkel, mit dem die Führung des Gewindetriebs gedreht wurde, und dem Verlauf der Führung d.h. der Ganghöhe, die sich in axialer Richtung erstreckt, bezogen auf den Drehwinkel der Führung. Der Gewindetrieb arbeitet mit anderen Worten gemäß einem Spindelgetriebe, dessen Vortrieb die verschiedenen Axialpositionen vorsieht.

Das Rücktrittgetriebe weist ferner ein Kupplungselement auf, das die Motorverbindungswelle schaltbar mit dem Abtriebverbindungselement verbindet. Das Kupplungselement wird durch die Axialpositionen geschaltet. Zumindest ein Teil des Kupplungselements ist mit der Führung verbunden, um durch die Drehung entlang der Führung in axialer Richtung versetzt zu werden. Das Kupplungselement ist eingerichtet, bei einem negativen Drehmoment zwischen Tretkurbelverbindungswelle und Abtriebverbindungselement, das bei Drehung der Tretkurbelverbindungswelle entgegengesetzt zur Tretantriebsrichtung auftritt, die Motorverbindungswelle von dem Abtriebverbindungselement zu trennen. Das Kupplungselement ist ferner eingerichtet, bei positivem Drehmoment die Motorverbindungswelle mit dem Abtriebverbindungselement zu verbinden. Hierzu ist ein Teil des Kupplungselements axial verschiebbar gelagert, in besondere der Teil, der mit der Führung verbunden und von dieser bei Verdrehung der Führung versetzt wird.

Die Erfindung kann durch geringfügige Modifikation bestehender Getriebe realisiert werden, schützt den Elektromotor vor Schäden, die beim Auslösen der Rücktrittbremse auftreten können, in verlässlicher Weise und benötigt nur sehr wenige mechanische Teile.

Eine erste Ausführungsform der Erfindung sieht ein Rücktrittgetriebe vor, wobei die Führung des Gewindetriebs mindestens eine Nut in Form eines Schraubenlinienabschnitts und einen darin eingreifenden Mitnehmer aufweist. Hat der Mitnehmer keine Seitenflächen, die sich über eine wesentliche Länge entlang der Nut erstrecken (d.h. ist der Kontakt zwischen Mitnehmer und Nut punktuell und nicht linienförmig), kann die Nut in einer Schraubenlinienform sein, die keine konstante Ganghöhe aufweist, sondern die lediglich eine Höhe aufweist, die in allgemeiner Weise mit dem Winkel zunimmt. Beispielsweise bei einem Mitnehmer mit kreisförmigem Querschnitt ergibt sich keine Verklemmung bei nicht konstanten Ganghöhen. Im allgemeinen kann die Windungsrichtung positiv oder negativ sein, wobei die Windungsrichtung die Richtung des Versatzes festlegt und somit mit dem Kupplungselement abgestimmt ist, um den geöffneten und den geschlossenen Kupplungszustand den Axialpositionen in gewünschter Weise zuzuordnen. Gemäß der ersten Ausführungsform ist das Abtriebverbindungselement ein an dem Tretlager platziertes Kettenrad, in das die Fahrradkette des Elektrofahrrads eingreifen kann. Auf der Tretkurbelverbindungswelle ist ein damit verbundener Tretkurbelaufsatz angeordnet, d.h. formschlüssig befestigt.

Die Führung der ersten Ausführungsform ist auf zwei gegenüberliegenden Zylinderflächen vorgesehen. Eine erste dieser Zylinderflächen, die zur Tretkurbel hin weist, ist an einer zylindrischen Innenseite des Kettenrads ausgebildet. Die erste Zylinderfläche ist axial versetzt zu einer Befestigungsfläche des Kettenrads angeordnet, wobei die Befestigungsfläche in formschlüssigen Eingriff mit einem Ende einer Abtriebswelle ist. Die zweite, von der Tretkurbel radial weg weisende Fläche der beiden Zylinderflächen ist an einer zylindrischen Außenseite des Tretkurbelaufsatzes ausgebildet. Der Tretkurbelaufsatz weist ferner eine zylindrische Innenfläche auf, über die der Tretkurbelaufsatz mit der Tretkurbelwelle verbunden ist. Der Tretkurbelaufsatz kann einteilig mit der Tretkurbel ausgeführt sein und das (verdickte) Ende der Tretkurbel sein, das an der Tretkurbelwelle liegt.

Das Kupplungselement der ersten Ausführungsform weist eine erste Formschlusselementeanordnung und eine dazu komplementäre zweite Formschlusselementeanordnung auf. Die beiden Formschlusselementeanordnungen können zueinander in Eingriff gebracht und voneinander gelöst werden, abhängig von dem Axialabstand zwischen den Formschlusselementeanordnungen, von denen zumindest eine axial verschiebbar gelagert ist, damit der Axialabstand durch verschieben geändert werden kann. Die erste Formschlusselementeanordnung ist an dem Kettenrad oder einem damit fest verbundenen abtriebsseitigen Radelement vorgesehen. Die erste Formschlusselementeanordnung ist axial verschiebbar gelagert. Die zweite Formschlusselementeanordnung ist an einem motorseitigen Radelement vorgesehen, das fest mit der Motorverbindungswelle verbunden ist. Die zweite Formschlusselementeanordnung ist nicht axial zu dem motorseitigen Radelement verschiebbar. Das motorseitige Radelement kann ein Getrieberad sein, das von der Motorverbindungswelle über ein Getrieberad der Motorverbindungswelle angetrieben wird, oder kann ein Rotorelement des Elektromotors sein.

Die Schraubenlinienform der Führung ist ausgebildet, bei Umkehrung der Rotationsrichtung der Tretkurbelverbindungswelle einen Axialhub als Differenz zwischen den Axialpositionen zu erzeugen, der ausreicht, das Kupplungselement zu lösen und zu schließen. Um die Axialbewegung, die von der Führung erzeugt wird, von der Führung an die axial verschiebbar gelagerte Formschlusselementeanordnung zu übertragen, besteht eine axialkraftübertragende Verbindung zwischen einem Teil der Führung, die sich axial verschieben kann, wenn die Führung durch die Umkehrung der Rotationsrichtung verdreht wird, und der axial verschiebbar gelagerten Formschlusselementeanordnung. Die Kupplung der ersten Ausführungsform ist eine schaltbare Formschlusskupplung, kann jedoch alternativ eine schaltbare Reibkupplung sein, die durch Axialverschiebung geschaltet wird. An die Stelle der jeweiligen Formschlusselementeanordnungen treten dann Reibschlusselementeanordnungen.

Insbesondere kann die erste Ausführungsform vorsehen, dass die Führung mehrere, umfänglich verteilte Nuten aufweist, die jeweils ein Ende aufweisen, das durch eine im Wesentlichen axial verlaufende Seitenwand geschlossen ist, sowie ein gegenüberliegendes Ende aufweisen, das in Axialrichtung offen ist. Die Nuten sind gleichmäßig entlang des Umfangs verteilt. Dadurch kann das Gesamtdrehmoment auf mehrere gleichartige und zueinander synchronisierte Führungen aufgeteilt werden. Die Führung weist pro Nut einen in der Nut beweglichen Mitnehmer auf, der sich ausgehend von dem Tretkurbelaufsatz radial weg und in die Nut hinein erstreckt. Das Rücktrittgetriebe weist ferner einen Axialbegrenzungsanschlag auf, der die Axialbewegung des Kettenrads zu Seite hin begrenzt, zu der das offene Ende der Nuten offen ist. Die Nuten sind gleichmäßig verteilt in der zylindrischen Innenseite des Kettenrads vorgesehen. Das Rücktrittgetriebeumfasst ferner eine Feder , die auf die Seite des Kettenrads in Axialrichtung drückt, auf der sich das offene Ende bzw. die offenen Enden der Nut bzw. Nuten befindet. Die Feder ist kreisförmig und kann ein Element umfassen, das die axial gerichtete Federkraft der Feder gleichmäßig umfänglich verteilt und auf das axial verschiebbar gelagerte Kettenrad verteilt.

In einer spezifischen Variante der ersten Ausführungsform umfasst das Rücktrittgetriebe die Tretkurbel selbst. Die Tretkurbel und der Tretkurbelaufsatz sind einteilig ausgebildet. An einem Ende der Tretkurbelwelle ist der Tretkurbelaufsatz über eine lösbare formschlüssige Verbindung verbunden , um die Tretkurbel als Einzelelement an die Tretkurbelwelle montieren zu können. Ferner kann ein Teil der Führung einteilig mit dem Kettenrad ausgebildet sein, das gleichzeitig durch seine axial verschiebbare Lagerung einen Teil des Kupplungselements vorsieht.

Eine zweite Ausführungsform der Erfindung betrifft ein erfindungsgemäßes Rücktrittgetriebe, wobei der Gewindetrieb ein Ringelement aufweist, das über die Führung auf der Tretkurbelverbindungswelle angeordnet ist. Das Ringelement ist somit ein einzelnes, individuelles Element, das als Rotations-Translationsumsetzer arbeitet, und das den Gewindetrieb vorsieht. Das Ringelement weist einen Axialmitnehmer auf, mit dem die von dem Ringelement erzeugte Verschiebung auf ein weiteres, individuelles Kupplungselement übertragen wird. Das Ringelement weist somit zumindest einen sich radial erstreckenden Axialmitnehmer auf, der sich radial von dem Ringelement weg erstreckt. Das Abtriebverbindungselement ist als Abtriebhohlwelle ausgeführt, in der sich die Tretkurbelverbindungswelle koaxial erstreckt. In der Abtriebhohlwelle ist ein axial und umfänglich begrenztes Fenster vorgesehen, durch das sich der Axialmitnehmer hindurch erstreckt. Die axiale Abmessung des Fensters (d.h. die Längserstreckung des Fensters in Richtung der Drehachse der Tretkurbelverbindungswelle) ist um eine vorbestimmte Differenz zwischen den Axialpositionen größer als die axiale Erstreckung des Axialmitnehmers . Dadurch kann sich der Axialmitnehmer in axialer Richtung bewegen und die Verschiebung ausführen, die sich bei Verdrehung der Führung (d.h. bei Richtungswechsel des Tretdrehmoments) ergibt. Das Kupplungselement weist eine Kupplungsscheibe auf, die axial verschiebbar auf der Abtriebhohlwelle gelagert und drehfest mit dieser verbunden ist. In die Kupplungsscheibe greift der Axialmitnehmer ein, wobei die Axialverschiebung des Axialmitnehmers auf das Kupplungselement (d.h. insbesondere an die axial verschiebbare Kupplungsscheibe) übertragen wird, und das Ringelement über den Axialmitnehmer das Kupplungselement durch Verschieben der Kupplungsscheibe schalten kann. Das Kupplungselement weist ferner erste und eine dazu komplementäre zweite Formschlusselementeanordnung auf. Die erste Formschlusselementeanordnung ist auf der Kupplungsscheibe vorgesehen oder mit dieser verbunden , und die zweite Formschlusselementeanordnung ist an einem motorseitigen Radelement vorgesehen , das fest mit der Motorverbindungswelle verbunden ist. Die Ganghöhe der Schraubenlinienform der Führung (d.h. der Hub des Ringelements bei einer Verdrehung um einen Winkelbetrag) und die axiale Abmessung des Fensters sind ausgebildet, bei Umkehrung der Rotationsrichtung der Tretkurbelverbindungswelle einen Axialhub als die Differenz zwischen den Axialpositionen zu erzeugen, der ausreicht, die Formschlusselementeanordnungen in Eingriff miteinander zu bringen und zu lösen. Der Winkelbetrag entspricht der Winkellänge der Führung zwischen zwei äußeren Blockadepositionen. Das Rücktrittgetriebe weist Anschläge auf, die das Ringelement zu beiden Seiten in Axialrichtung begrenzen, wobei diese Anschläge durch die beiden in Axialrichtung gegenüberliegenden Seiten des Fensters gebildet werden. Es sind jedoch alternative Begrenzungen möglich, die entweder den Verdrehungswinkel des Ringelements oder den Axialversatz des Ringelements (bzw. den Axialversatz des Axialmitnehmers) begrenzen. Da die Führung zu jederzeit beidseitig begrenzt ist (im Gegensatz zu der Nut der ersten Ausführungsform, die ein offenes Ende aufweist), muss das Ringelement (d.h. der Gewindetrieb) nicht mit einer Federkraft in Axialrichtung beaufschlagt werden.

Eine spezifische Variante der zweiten Ausführungsform betrifft ein Rücktrittgetriebe, wobei das Ringelement als (in Axialrichtung) kurze Hohlwelle ausgeführt ist, deren Innenseite unmittelbar an die Tretkurbelverbindungswelle angrenzt und eine Nut als Teil der Führung aufweist, die die Form des Schraubenlinienabschnitts hat. In diese Nut greift als weiterer Teil der Führung eine punktuelle oder schraubenlinienförmige radiale Erhebung der Tretkurbelverbindungswelle ein. Die Erhebung und die Nut erlauben eine Verdrehung zueinander. Die Außenseite der Hohlwelle (die sich am äußeren Zylindermantel der Hohlwelle befindet) sieht den Axialmitnehmer vor. Der Axialmitnehmer weist eine Radiallänge (d.h. radiale Erhebung ausgehend von der Außenseite der Hohlwelle) auf, die mindestens der Summe aus Dicke der Abtriebhohlwelle und Eingrifftiefe des Axialmitnehmers in die Kupplungsscheibe entspricht. Dadurch kann sich der Axialmitnehmer durch die Abtriebhohlwelle hindurch erstrecken und kann sich zusätzlich von der Außenseite der Abtriebhohlwelle radial nach außen erstrecken, um in das Kupplungselement (genauer: in die Kupplungsscheibe) eingreifen zu können. Die Kupplungsscheibe begrenzt zu beiden Axialseiten den Axialmitnehmer. Die Kupplungsscheibe ist ferner in jeder Axialposition über sich in Axialrichtung erstreckende Stäbe mit der Abtriebhohlwelle oder mit einem Kettenrad des Abtriebverbindungselements drehfest und axial verschiebbar verbunden. Durch die Stäbe wird im Allgemeinen ein Lager vorgesehen, das in Axialrichtung verschiebbar ist, jedoch eine drehfeste Verbindung vorsieht. Die Stäbe erstrecken sich auf einer Seite der Kupplungsscheibe, und auf der dazu entgegengesetzten Seite weist die Kupplungsscheibe die erste Formschlusselementanordnung in Form von kugelabschnittförmigen Erhebungen auf, zu denen komplementär jeweilige Vertiefungen als die zweite Formschlusselementeanordnung vorgesehen sind. Die erste und die zweite Formschlusselementeanordnung greifen formschlüssig ineinander, wenn von dem Ringelement eine Axialposition erreicht wird, die bei einer Drehung der Tretkurbelverbindungswelle entgegen einer Antriebsrichtung auftritt. Dadurch sind die erste und die zweite Formschlusselementeanordnung drehfest miteinander verbunden und das Kupplungselement ist geschlossen. Die erste und die zweite Formschlusselementeanordnung sind bei einer Axialposition (des Ringelements), wie sie bei Drehung der Tretkurbelverbindungswelle in Antriebsrichtung auftritt, voneinander getrennt und das Kupplungselement ist geöffnet. Die Axialposition und die zweite Axialposition treten bei entgegengesetzten Verdrehungen des Gewindetriebs bzw. der Führung auf, d.h. bei entgegengesetzten Betätigungen der Tretkurbel bzw. Drehungsrichtungen der Tretkurbelwelle.

Gemäß einem weiteren Aspekt der zweiten Ausführungsform ist die Abtriebhohlwelle in ihrer Längserstreckung in der Höhe des Fensters in zwei Abtriebhohlwellenstücke zweigeteilt. Ein Ende eines Abtriebhohlwellenstücks stößt an ein Ende des zweiten Abtriebhohlwellenstücks. Zumindest ein Ende der zwei Abtriebhohlwellenstücke weist eine umfänglich und axial begrenzte Längsausnehmung auf, die das Fenster bildet. Wenn beide Enden eine Längsausnehmung aufweisen, wird das Fenster von beiden gebildet. Das Fenster ist vorzugsweise gebildet von zwei gegenüberliegenden Seiten, die sich axial erstrecken, und von zwei gegenüberliegenden Seiten, die sich tangential erstrecken. Das Fenster weist in Axialrichtung eine konstante Höhe auf, um ein Gleiten des Axialmitnehmers in Axialrichtung zu ermöglichen.

Die Erfindung wird ferner umgesetzt durch ein Verfahren zur gesteuerten Kopplung von Abtrieb und Motor eines Elektrofahrrads, wobei der Motor von dem Abtrieb mechanisch abgekuppelt wird, wenn eine Tretkurbel des Elektrofahrrads entgegen der Antriebsrichtung betätigt wird. Ein Gewindetrieb ist in drehmomentübertragender Verbindung mit dem Abtrieb und der Tretkurbel vorgesehen und wird mit einer Drehmomentdifferenz zwischen dem Abtrieb und der Tretkurbel beaufschlagt. Dieses Beaufschlagen entspricht einem Verwinden oder Verdrehen zwischen Abtrieb und Tretkurbel. Der Drehsinn der Drehmomentdifferenz wird in unterschiedliche Axialpositionen bei unterschiedlichen Drehsinnen umgesetzt durch Führen des Gewindetriebs mit einer schraubenlinienabschnittförmigen Führung, deren Achse der Drehachse der Drehmomentdifferenz entspricht. Ein Kupplungselement wird durch Übertragen der Axialposition, die sich durch den Drehsinn der Drehmomentdifferenz ergibt, von dem Gewindetrieb auf das Kupplungselement angesteuert. Das Kupplungselement verbindet gesteuert den Abtrieb und den Motor. Bei einem Drehsinn der Drehmomentdifferenz, der einer Betätigung der Tretkurbel entgegen der (für die Tretkurbel üblichen) Antriebsrichtung entspricht, trennt das Kupplungselement den Motor von dem Abtrieb aufgrund der von dem Gewindetrieb vorgesehenen und aufgrund der an das Kupplungselement übertragenen Axialposition.

Eine erste Ausführungsform des erfindungsgemäßen Verfahrens ist mit der Wirkungsweise des oben beschriebenen Rücktrittgetriebes gemäß der ersten Ausführungsform beschrieben. Die erste Ausführungsform des erfindungsgemäßen Verfahrens sieht vor, dass der Drehsinn der Drehmomentdifferenz umgesetzt wird durch die Führung. Mindestens ein Mitnehmer greift in eine zumindest an einer Seite abgeschlossene Nut ein und wird in dieser geführt. Eine Betätigung der Tretkurbel wird auf einen damit stoffschlüssig oder formschlüssig verbundenen Tretkurbelaufsatz übertragen. Die Betätigung wird vom Tretkurbelaufsatz über die Führung an eine Innenseite eines axial verschiebbar gelagerten Kettenrads übertragen, das mit dem Abtrieb verbunden ist. Aufgrund der schraubenlinienabschnittförmigen mindestens einen Nut, in die jeweils einer der Mitnehmer eingreift, weist bei Betätigen der Kurbel in Antriebsrichtung das Kettenrad aufgrund der schraubenlinienabschnittförmigen Nut eine andere Axialposition auf, als bei Betätigen der Kurbel entgegen der Antriebsrichtung. Die von der Führung erzeugte Verschiebung wird an das Kettenrad übertragen, das in Axialrichtung verschoben wird. Ein von dem Motor angetriebenes Radelement ist bei der Axialposition, die bei Betätigen der Tretkurbel in Antriebsrichtung von dem Kettenrad eingenommen wird, drehmomentübertragend mit dem Kettenrad verbunden . Beim Übergang in die andere Axialposition, die bei entgegengesetzter Betätigung der Tretkurbel auftritt, wird das Kettenrad axial von dem Radelement weg bewegt. Durch das Bewegen in Axialrichtung, d.h. durch die auf das Kettenrad übertragene Verschiebung wird der Motor von dem Abtrieb getrennt (oder wieder mit diesem verbunden, wenn die Tretkurbel wieder in der üblichen Richtung angetrieben wird).

Eine zweite Ausführungsform des erfindungsgemäßen Verfahrens ist mit der Wirkungsweise des oben beschriebenen Rücktrittgetriebes gemäß der zweiten Ausführungsform beschrieben. Die zweite Ausführungsform sieht vor, dass der Drehsinn der Drehmomentdifferenz umgesetzt wird durch die Führung, indem ein Ringelement, das auf einer mit der Tretkurbel verbundenen Tretkurbelverbindungswelle angeordnet ist, über die schraubenlinienabschnittförmige Führung mit der Tretkurbelverbindungswelle verbunden ist. Eine mit dem Abtrieb verbundene Abtriebhohlwelle umgreift das Ringelement sowie die Tretkurbelverbindungswelle. Ein Axialmitnehmer, der mit dem Ringelement verbunden ist (sowie das Ringelement selbst), dreht aufgrund einer Tangentialkraft, die auf den Axialmitnehmer ausgeübt wird, das Ringelement gegenüber der Tretkurbelverbindungswelle, wenn Drehmomente mit unterschiedlichem Drehsinn von der Tretkurbel an die Abtriebhohlwelle übertragen werden. Die Drehung verschiebt aufgrund der schraubenlinienabschnittförmigen Führung das Ringelement und den Axialmitnehmer zwischen den unterschiedlichen Axialpositionen in axialer Richtung. Eine Kupplungsscheibe, die ein von dem Motor angetriebenes Radelement mit dem Abtrieb steuerbar verbindet, wird von dem Axialmitnehmer durch das axiale Verschieben angesteuert. Die Kupplungsscheibe trennt das von dem Motor angetriebene Radelement von dem Abtrieb, wenn der Axialmitnehmer eine Axialposition einnimmt, die bei Betätigen der Tretkurbel entgegen der Antriebsrichtung auftritt. Die Drehbewegung wird somit von dem Ringelement umgesetzt in eine Axialbewegung, die von dem Axialmitnehmer an eine Kupplung (an eine Kupplungsscheibe) übertragen wird.

Schließlich wird die Erfindung umgesetzt mittels eines Antriebsstrangs, der das Rücktrittgetriebe, daran angeschlossene Tretkurbeln und Abtriebselemente (bspw. ein vorderes Kettenblatt) umfasst, sowie einen Elektromotor, der bspw. über ein Motorgetriebe mit dem Rücktrittgetriebe verbunden ist.

Anstatt einer ausschließlich mechanischen Übertragung der Axialverschiebung an die Kupplung kann auch eine elektromechanische Übertragung vorgesehen sein, wobei die Kupplung elektrisch angesteuert wird und eine Betätigung der Tretkurbel eine Richtung, die der Antriebsrichtung entgegengesetzt ist, elektromechanisch erfasst wird, beispielsweise mittels dem Gewindetrieb der Erfindung, und elektrisch zur elektrischen Ansteuerung der Kupplung an diese übertragen wird.

Obwohl es bevorzugt ist, für die Schraubenlinienform mit einer nur positiven oder nur negativen Ganghöhe, ggf. unterbrochen von Abschnitten mit Ganghöhen von null, vorzusehen, kann die Schraubenlinienform auch einen beliebigen Ganghöhenverlauf aufweisen, soweit für die beiden Axialpositionen unterschiedliche Höhen vorgesehen sind. Der Verlauf der Führung bzw. der Ganghöhe sollte derart kontinuierlich sein, dass die Verdrehung der Führung nicht zu einer Verkantung in der Führung führt.

### Kurze Beschreibung der Figuren

Ausführungsbeispiele der Erfindung sind in den Figuren dargestellt und werden in der nachfolgenden Beschreibung näher erläutert.

Es zeigen:
Figur 1 ein schematisches Schaubild, das die prinzipielle Wirkungsweise der Erfindung erläutert;
Figur 2 eine erste Ausführungsform des erfindungsgemäßen Rücktrittgetriebes; und
Figur 3 eine zweite Ausführungsform des erfindungsgemäßen Rücktrittgetriebes.

### Ausführungsbeispiele

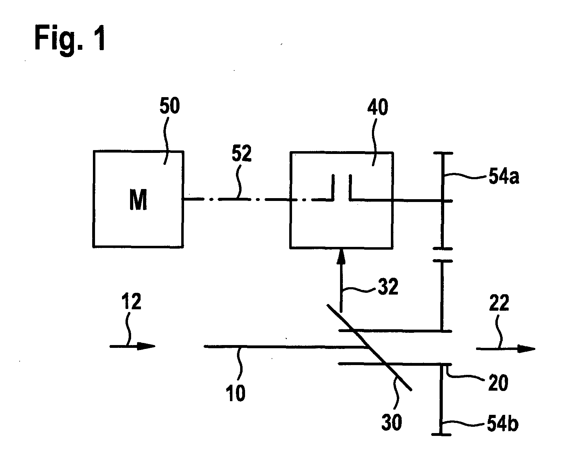

Figur 1 ist eine schematische Blockdarstellung der Erfindung, die gleichermaßen wesentliche Elemente des erfindungsgemäßen Rücktrittgetriebes und des erfindungsgemäßen Verfahrens wiedergibt. In Figur 1 ist eine Tretkurbelverbindungswelle 10 dargestellt, die gemäß einem Pfeil 12 von einer Tretkurbel (nicht dargestellt) angetrieben wird. Der Pfeil 12 zeigt hierbei die Leistungsflussrichtung. Ferner ist eine Abtriebverbindungswelle 20 vorgesehen, die gemäß einem Pfeil 22, der die Leistungsflussrichtung angibt, Leistung für den Abtrieb (beispielsweise ein Hinterradritzel, nicht dargestellt) bereitstellt.

Zwischen Abtriebverbindungswelle 20 und Tretkurbelverbindungswelle 10 ist ein Rotations/Translations-Umsetzer in Form eines Gewindetriebs 30 dargestellt, der die Richtung der Drehmomentübertragung zwischen Abtriebverbindungswelle 20 und Tretkurbelverbindungswelle 10 erfasst und je nach Richtung unterschiedliche Axialpositionen vorsieht. Eine Verdrehung zwischen Abtriebverbindungswelle 20 und Tretkurbelverbindungswelle 10 wird somit in eine Axialverschiebung umgesetzt. Der Gewindetrieb 30 sieht nur ein geringes Drehspiel zwischen Abtriebverbindungswelle 20 und Tretkurbelverbindungswelle 10 vor und ist durch eine beidseitige Begrenzung in seiner Drehung bzw. in seiner Verschiebung limitiert. Das Drehspiel beträgt typischerweise weniger als 30°, weniger als 15° oder vorzugsweise maximal 10° und hängt von der Begrenzung und der Schraubenlinienform des Gewindetriebs 30 ab. Der Gewindetrieb 30 überträgt das Drehmoment der Tretkurbel (d.h. der Tretkurbelverbindungswelle 10) an den Abtrieb (d.h. Abtriebverbindungswelle 20) vorzugsweise vollständig oder nur teilweise. Die Verbindung zwischen Abtriebverbindungswelle 20 und Tretkurbelverbindungswelle 10 durch den Gewindetrieb 30 kann eine mittelbare oder unmittelbare Verbindung sein, die eine Drehbewegung überträgt. Der Gewindetrieb 30 kann an jeder Stelle des Abtriebs, der Abtriebverbindungswelle 20, des Tretkurbelantriebs und der Tretkurbelverbindungswelle 10 angeschlossen sein.

Die Schrägstellung des Gewindetriebs 30 entspricht dem Führungsverlauf, der durch die Schraubenlinienform bestimmt ist. Durch die Schrägstellung wird bei einem Verdrehen des Gewindetriebs 30 ein Axialversatz erzeugt, der eine Kupplung 40 ansteuert. Ein (mechanischer) Steuereingang der Kupplung 40 ist über eine Verbindung 32 (symbolisiert durch einen Pfeil) mit dem Gewindetrieb 30 verbunden.

Die Kupplung 40 verbindet einen Elektromotor 50 mit dem Abtrieb 20 bzw. 22. Die Kupplung 40 ist über eine schematisch dargestellte Verbindung 52 mit dem Motor 50 verbunden, die bspw. ein Getriebe umfassen kann. Die Kupplung 40 ist ferner über ein Getriebe 54a, 54b mit dem Abtrieb 22 (mit der Abtriebswelle 20) verbunden, wobei dieses Getriebe 54a, 54b ebenso durch eine beliebige andere drehmomentübertragende Verbindung vorgesehen werden kann.

Der Gewindetrieb 30 setzt den Drehsinn des von der Tretkurbelantrieb 12 (hier: die Tretkurbelverbindungswelle 10) an den Abtrieb 22 (hier: die Abtriebverbindungswelle 20) übertragenen Drehmoments um in eine Längsverschiebung, mit der die Kupplung über Verbindung 32 angesteuert wird. Abhängig von der Ansteuerung verbindet die Kupplung 40 den Motor 50 mit dem Abtrieb 22 (d.h. der Abtriebverbindungswelle 20) oder trennt den Motor von dem Abtrieb 22.

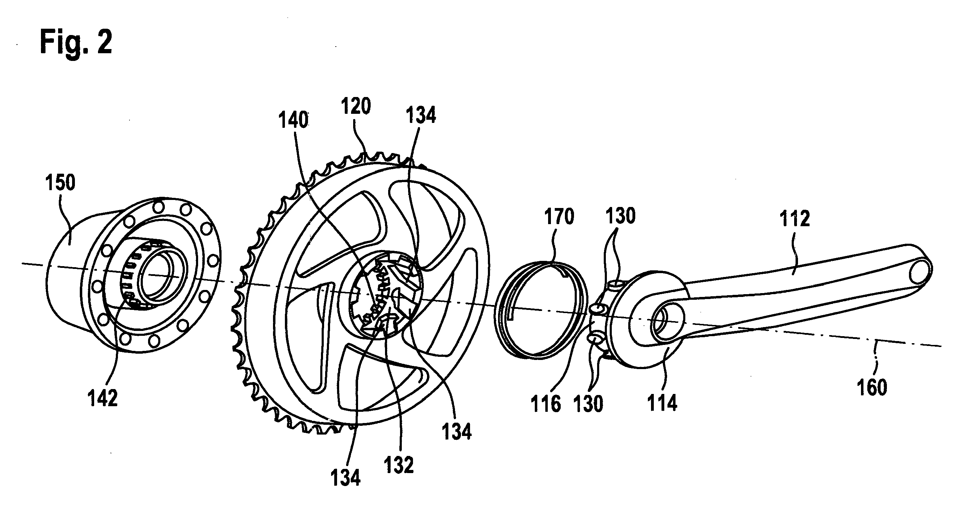

In Figur 2 ist die eine Ausführungsform des erfindungsgemäßen Rücktrittgetriebes dargestellt, die der oben beschriebenen ersten Ausführungsform entspricht. Eine Kurbel 112 weist einen Tretkurbelaufsatz 114 auf, der eine zu einem Kettenrad 120 hin axial versetzte zylindrische Außenseite 116 hat. Auf der Außenseite 116 sind Mitnehmer 130 ausgestaltet, die sich radial von der Außenseite 116 weg erstrecken. Die Mitnehmer 130 haben einen kreisförmigen Querschnitt.

Das Kettenrad 120 weist eine gegenüberliegende zylindrische Innenseite 132 auf, in der schräg verlaufende Nuten 134 vorgesehen sind, in die die Mitnehmer 130 eingreifen. Die schräg verlaufende Nuten 134 haben abschnittsweisen schraubenlinienförmigen Verlauf, der sich an der Zylinderform der Innenseite 132 orientiert. Die Nuten 134 sind in der Innenseite 132 eingelassen. Die Nuten sind an einem Ende geschlossen und an dem gegenüberliegenden Ende in axiale Richtung geöffnet, um die Mitnehmer bei der Montage des Getriebes in die Nut einführen zu können.

Das Kettenrad 120 weist ferner eine axial zu den Nuten 134 versetzte erste Formschlusselementeanordnung 140 an der Innenseite 132 auf. Die erste Formschlusselementeanordnung 140 umfasst Formschlusselemente, die als Formschlusskupplungselemente wirken. Ein motorseitiges Radelement 150 weist eine zweite Formschlusselementeanordnung 142 auf, die komplementär zu der ersten Formschlusselementeanordnung 140 ausgebildet sind. Die erste und die zweite Formschlusselementeanordnung 140, 142 bilden eine steuerbare Formschlusskupplung. Die Steuerung wird im Wesentlichen durch eine axial verschiebbare Lagerung (nicht dargestellt) des Kettenrads 120 vorgesehen sowie durch die schräg verlaufenden Nuten 134 des Kettenrads 120, wobei das Kettenrad 120 sich relativ zu dem axial feststehenden motorseitigen Radelement 150 bewegt, angesteuert von dem Axialversatz durch die Nuten 132 bzw. durch eine Führung, die von den Nuten 132 und den Eingriffen 130 vorgesehen wird. Eine kreisförmige Druckfeder 170, die konzentrisch zu der Drehachse 160 vorgesehen ist, übt einen axialen Druck auf den Tretkurbelaufsatz 114 und das Kettenrad 120 aus, um das axial verschiebbare Kettenrad 120 von dem Tretkurbelaufsatz 114 weg zu drücken.

Eine Tretkurbelwelle (zur besseren Lesbarkeit nicht dargestellt) erstreckt sich entlang der Drehachse 160, die die Drehachse der Tretkurbelwelle bildet.

Wenn die Tretkurbel 112, die in formschlüssigen Eingriff mit der Tretkurbelwelle (nicht dargestellt) ist, entgegen der Antriebsrichtung betätigt wird, verschieben sich die Eingriffe 130 entlang der Nuten 134, wobei durch die Schräglage der Nuten 134 das Kettenrad zu der Tretkurbel 112 hin und insbesondere von dem motorseitigen Radelement 150 gezogen wird. Dadurch entfernen sich die Formschlusselementeanordnungen 140 und 142 voneinander, wodurch das motorseitige Radelement 150 von dem Kettenrad 120 entkoppelt wird. Die Verbindung zwischen Gewindetrieb (ausgebildet durch Nuten 134 und Eingriffe 130) und Kupplung (ausgebildet durch Formschlusselementeanordnungen 140 und 142) ergibt sich dadurch, das die Nuten 134 und die Formschlusselementeanordnung 142 miteinander fest verbunden sind, da sie gemeinsam an dem Kettenrad 120 ausgebildet sind. Gewissermaßen bildet das Kettenrad 120, insbesondere dessen zylindrische Innenseite 132, die Verbindung, die in Fig. 1 durch die Steuerverbindung 32 dargestellt ist.

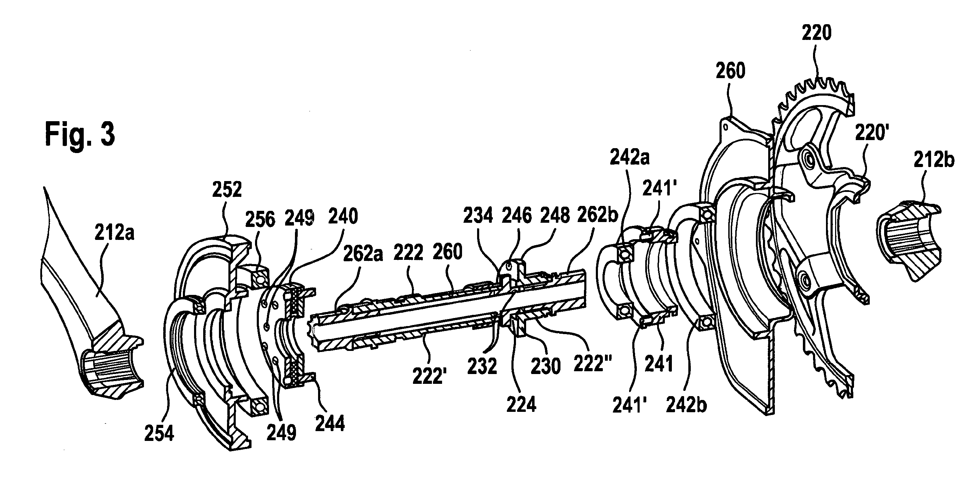

In Figur 3 ist die eine Ausführungsform des erfindungsgemäßen Rücktrittgetriebes dargestellt, die der oben beschriebenen zweiten Ausführungsform entspricht. Das in Figur 3 dargestellte Rücktrittgetriebe weist eine (innere) Tretkurbelverbindungswelle 260 auf, deren Längsachse der Drehachse (zur besseren Lesbarkeit nicht dargestellt) entspricht. Die Tretkurbelverbindungswelle 260 weist an beiden Enden formschlüssige Verbindungselemente 262a, 262b eingerichtet zur Befestigung von Tretkurbeln 212a, b auf. Die Tretkurbelverbindungswelle 160 bildet eine innere Welle, die von einer äußeren, als Hohlwelle ausgebildeten Abtriebswelle 222 umgeben ist. Ein Kettenrad 220 ist über eine Kettenradspinne 220' an einem Kettenradträger 241 befestigt, der mittels Drehlager 242a, b auf der Abtriebhohlwelle 222 befestigt ist. Die Abtriebhohlwelle 222 ist zweigeteilt in einen Längsabschnitt 222' und einen Längsabschnitt 222" aufgeteilt, die miteinander verbunden sind und ebenso mit den formschlüssigen Verbindungselementen 262a, 262b verbunden sind. Die Längsabschnitte 222' und 222" werden auch als Abtriebhohlwellenstücke bezeichnet.

Auf der Tretkurbelverbindungswelle 260 ist der Gewindetrieb vorgesehen, der ein Ringelement 230 aufweist und ein sich radial von der Tretkurbelverbindungswelle 260 erhebendes Führungselement 232. Das Ringelement 230 hat eine innenliegende schraubenlinienförmige Nut, in die das dazu komplementär ausgebildete Führungselement 232 der Tretkurbelverbindungswelle 260 eingreift. Die Nut des Ringelements 230 und das Führungselement 232 bilden einen Gewindetrieb. Bei Verdrehung des Ringelements 230 relativ zu der Tretkurbelverbindungswelle 260 ergibt sich durch die schraubenlinienförmige Führung ein Axialversatz. Das Ringelement 230 weist einen sich radial erstreckenden einen Axialmitnehmer 234 auf, der sich durch ein Fenster 224 in der Antriebswelle (als Hohlwelle ausgebildet) hindurch erstreckt. Die Verschiebung des Ringelements wird von dem Axialmitnehmer von dem Ringelement radial nach außen (d.h. außerhalb der Abtriebhohlwelle) übertragen. Das Fenster 224 ist an der Stelle vorgesehen, an der die Längsabschnitte 222' und 222" aneinanderstoßen und ist umfänglich sowie axial begrenzt. Das Fenster wird gebildet durch Ausnehmungen in dem Ende des Längsabschnitts 222'. In Axialrichtung ist das Fenster um eine gewünschte Hublänge breiter als der Axialmitnehmer 234, um eine Verdrehung in eine Verschiebung gemäß dem Hub zu ermöglichen. In tangentialer Richtung wird der Axialmitnehmer von axial verlaufenden Seitenflächen des Fensters geführt, im wesentlichen ohne Spiel oder mit einem geringen Spiel, das einer Verdrehung von nicht mehr als 15 oder 10 Grad entspricht.

Der radial vorstehende Axialmitnehmer greift in eine Kupplungsscheibe 240 ein, die den Axialmitnehmer 234 zu beiden Seiten in Axialrichtung begrenzt. Der Axialmitnehmer wird somit in der Kupplungsscheibe 240 geführt. Die Kupplungsscheibe weist umfänglich verteilte Stäbe 244 auf, die sich in axialer Richtung zunächst durch Durchgangslöcher 246 in einer umfänglichen, sich radial erstreckenden Wulst 248 hindurch erstrecken. Der Innenquerschnitt der Durchgangslöcher 246 entspricht im Wesentlichen dem Außenquerschnitt der Stäbe 244, wobei jeder Stab in einem Durchgangsloch geführt wird, um die Kupplung 240 drehmomentübertragend über die Stäbe mit der Wulst 248 des Längsabschnitts 222' zu verbinden. Ferner wird durch die Führung, die von den Stäben und den Durchgangslöchern der Wulst gebildet wird, ein Axialgleitlager vorgesehen, damit sich die Kupplungsscheibe 240 axial zur Abtriebhohlwelle 222 gemäß der Verschiebung verschieben kann, die von dem Ringelement und deren Führung vorgesehen wird.

Die Stäbe erstrecken sich ferner in Bohrungen des Kettenradträgers 241, die sich in axialer Richtung radial versetzt zur Drehachse der Antriebhohlwelle 222 erstrecken. Somit verbinden die Stäbe die Antriebhohlwelle 222 (d.h. deren Wulst 248) mit dem Kettenrad 220. Die Bohrungen 241' des Kettenradträgers 241 weisen eine Tiefe auf und die Stäbe weisen eine Radiallänge auf, die eine mechanische Drehverbindung zwischen Wulst 248 der Abtriebhohlwelle 222 und Kettenrad 220 unabhängig von der Axialverschiebung der Kupplung 240 (und somit der Stäbe 244) vorsieht.

Auf der Seite der Kupplungsscheibe 240, die den Stäben entgegengesetzt ist, weist die Kupplungsscheibe eine erste Formschlusselementanordnung in Form von kugelabschnittförmigen Erhebungen 249 auf, die von Kugeln gebildet werden, die in der Kupplungsscheibe eingelassen sind. Ein mit dem Elektromotor (nicht dargestellt) verbundenes motorseitiges Rad 252 ist von einem Axiallager 254 und einem Radiallager 256 gelagert und weist als zweite, zur ersten komplementäre Formschlusselementeanordnung Vertiefungen auf, in die die Erhebungen 249 eingreifen können. Die Seite des motorseitigen Rads 252, das der Kupplung 240 zugewandt ist, kann nicht dargestellt werden, so dass auch die Vertiefungen, die zu der Kupplung 240 hin offen sind, nicht dargestellt werden können. Die erste Formschlusselementanordnung 249 und die zweite Formschlusselementanordnung bilden eine schaltbare Kupplung, wobei der Axialversatz der Kupplung, hervorgerufen durch eine Verdrehung des Gewindetriebs (gebildet von Ringelement 230 und dessen Führung), den Schaltzustand bestimmt.

Ein Gehäuse 260 deckt den Kettenradträger 241, dessen Lagerung, einen Großteil der Abtriebhohlwelle 222 (die das Abtriebverbindungselement vorsieht), das Ringelement 20, die Kupplungsscheibe 240 und zumindest eine Innenseite des motorseitigen Rads 252 ab.

Während in der ersten Ausführungsform (vgl. Figur 2) der Gewindetrieb und ein Teil des Kupplungselements starr miteinander verbunden sind über das Kettenrad, wodurch sich das Kettenrad bei Rücktritt axial bewegt (weniger als 3 mm oder 2 mm), um das Kupplungselement zu schalten, erlaubt es das zusätzliche Element des Ringelements und des zugehörigen Axialmitnehmers der zweiten Ausführungsform die Kupplung (d.h. die Kupplungsscheibe selbst) axial verschiebbar von dem Kettenrad (d.h. dem Abtrieb) vorzusehen. Dadurch sieht die zweite Ausführungsform vor, dass sich bei Rücktritt ein Kupplungselement axial bewegt, ohne dass sich das Kettenrad bewegen muss. Durch die Stäbe ist die Kupplung axial verschiebbar zum Kettenrad gelagert, so dass die Kupplung durch Axialverschiebung gesteuert werden kann, ohne jedoch das Kettenrad, das den Abtrieb darstellt, axial verschieben zu müssen. Die zweite Ausführungsform sieht daher im Gegensatz zur ersten Ausführungsform vor, dass der Gewindetrieb (und ein Teil des Kupplungselements) auf der einen Seite und das Kettenrad auf der anderen Seite zueinander axial verschiebbar sind. Die erste Ausführungsform ermöglicht somit einen einfachen Aufbau, während sich mit der zweiten Ausführungsform eine Axialverschiebung des Kettenrads vermeiden lässt. Die zweite Ausführungsform ist wird als die beste Art und Weise der Ausführung der Erfindung angesehen.

## Patentansprüche

1. Rücktrittgetriebe für Elektrofahrräder, wobei das Rücktrittgetriebe eine Motorverbindungswelle (52) geeignet zum Anschluss an einen Elektromotor, eine Tretkurbelverbindungswelle (10) geeignet zum Anschluss an eine Tretkurbel und ein Abtriebverbindungselement (20) geeignet zum Anschluss an ein Laufrad umfasst, **dadurch gekennzeichnet, dass** das Rücktrittgetriebe ferner einen Gewindetrieb (30) umfasst, der zwischen Tretkurbelverbindungswelle (10) und Abtriebverbindungselement (20) angeschlossen ist, wobei der Gewindetrieb (30) eine Führung in der Form eines Schraubenlinienabschnitts mit einer konstanten oder variablen Ganghöhe aufweist, und eingerichtet ist, bei entgegengesetzten Drehmomenten zwischen Tretkurbelverbindungswelle (10) und Abtriebverbindungselement (20) aufgrund der Schraubenlinienform unterschiedliche Axialpositionen vorzusehen, wobei das Rücktrittgetriebe ferner ein Kupplungselement (40) aufweist, das die Motorverbindungswelle (50) schaltbar mit dem Abtriebverbindungselement (20) verbindet, wobei das Kupplungselement (40) mit dem Gewindetrieb axialkraftübertragend verbunden ist, durch die Axialpositionen geschaltet werden, und eingerichtet ist, bei einem negativen Drehmoment zwischen Tretkurbelverbindungswelle (10) und Abtriebverbindungselement (20), das bei Drehung der Tretkurbelverbindungswelle entgegengesetzt zur Tretantriebsrichtung auftritt, die Motorverbindungswelle (52) von dem Abtriebverbindungselement (20) zu trennen.

2. Rücktrittgetriebe nach Anspruch 1, wobei die Führung des Gewindetriebs mindestens eine Nut (134) in Form eines Schraubenlinienabschnitts und einen darin eingreifenden Mitnehmer (130) aufweist, das Abtriebverbindungselement von einem Kettenrad (120) vorgesehen wird, und auf der Tretkurbelverbindungswelle ein damit verbundener Tretkurbelaufsatz (114) angeordnet ist, wobei die Führung auf zwei gegenüberliegenden Zylinderflächen vorgesehen ist, wobei eine erste, zur Tretkurbel hin weisende Fläche der Zylinderflächen an einer zylindrischen Innenseite (132) des Kettenrads ausgebildet ist, und eine zweite, von der Tretkurbel (112) weg weisende Fläche der Zylinderflächen an einer zylindrischen Außenseite (116) des Tretkurbelaufsatzes ausgebildet ist, wobei das Kupplungselement eine erste und eine dazu komplementäre zweite Formschlusselementeanordnung (140; 142) aufweist, die zueinander in Eingriff gebracht und voneinander gelöst werden können, wobei die erste Formschlusselementeanordnung (140) an dem Kettenrad (120) oder einem damit fest verbundenen abtriebsseitigen Radelement vorgesehen ist und die zweite Formschlusselementeanordnung (142) an einem motorseitigen Radelement (150) vorgesehen ist, das mit der Motorverbindungswelle verbunden ist, wobei die Schraubenlinienform der Führung ausgebildet ist, bei Umkehrung der Rotationsrichtung der Tretkurbelverbindungswelle einen Axialhub als Differenz zwischen den Axialpositionen zu erzeugen, der ausreicht, das Kupplungselement zu lösen und zu schließen.

3. Rücktrittgetriebe nach Anspruch 2, wobei die Führung mehrere, umfänglich verteilte Nuten (134) aufweist, die jeweils ein Ende aufweisen, das durch eine im Wesentlichen axial verlaufende Seitenwand geschlossen ist, sowie ein gegenüberliegendes Ende aufweisen, das in Axialrichtung offen ist; die Führung ferner pro Nut (134) einen in der Nut beweglichen Mitnehmer (130) aufweist, der sich ausgehend von dem Tretkurbelaufsatz radial weg und in die Nut hinein erstreckt, das Rücktrittgetriebe ferner einen Axialbegrenzungsanschlag aufweist, der die Axialbewegung des Kettenrads zu Seite hin begrenzt, zu der das offene Ende der Nuten offen ist, die Nuten gleichmäßig verteilt in der zylindrischen Innenseite des Kettenrads vorgesehen ist, und das Rücktrittgetriebe ferner eine Feder (170) umfasst, die auf die Seite des Kettenrads in Axialrichtung drückt, auf der sich das offene Ende befindet.

4. Rücktrittgetriebe nach Anspruch 2 oder 3, das ferner die Tretkurbel (112) umfasst, wobei die Tretkurbel und der Tretkurbelaufsatz einteilig ausgebildet sind und an einem Ende der Tretkurbelwelle über eine formschlüssige Verbindung mit dieser verbunden ist.

5. Rücktrittgetriebe nach Anspruch 1, wobei der Gewindetrieb ein Ringelement (230) aufweist, das über die Führung auf der Tretkurbelverbindungswelle angeordnet ist, das Ringelement (230) zumindest einen sich radial erstreckenden Axialmitnehmer (234) aufweist, der sich radial von dem Ringelement (230) weg erstreckt; das Abtriebverbindungselement als Abtriebhohlwelle (222) ausgeführt ist, in der sich die Tretkurbelverbindungswelle (260) koaxial erstreckt; in der Abtriebhohlwelle (222) ein axial und umfänglich begrenztes Fenster (224) vorgesehen ist, durch das sich der Axialmitnehmer hindurch erstreckt, wobei die axiale Abmessung des Fensters um eine vorbestimmte Differenz zwischen den Axialpositionen größer als die axiale Erstreckung des Axialmitnehmers (234) ist; wobei das Kupplungselement eine Kupplungsscheibe (240) aufweist, die axial verschiebbar auf der Antriebshohlwelle gelagert und drehfest mit dieser verbunden ist und in die der Axialmitnehmer (234) eingreift; das Kupplungselement ferner erste (249) und eine dazu komplementäre zweite Formschlusselementeanordnung aufweist, wobei die erste Formschlusselementeanordnung (249) auf der Kupplungsscheibe (240) vorgesehen ist oder mit dieser verbunden ist, und die zweite Formschlusselementeanordnung an einem an einem motorseitigen Radelement (252) vorgesehen ist, das fest mit der Motorverbindungswelle verbunden ist; und wobei die Ganghöhe der Schraubenlinienform der Führung und die axiale Abmessung des Fensters (224) ausgebildet sind, bei Umkehrung der Rotationsrichtung der Tretkurbelverbindungswelle einen Axialhub als die Differenz zwischen den Axialpositionen zu erzeugen, der ausreicht, die Formschlusselementeanordnungen in Eingriff miteinander zu bringen und zu lösen.

6. Rücktrittgetriebe nach Anspruch 5, wobei das Ringelement (230) als kurze Hohlwelle ausgeführt ist, deren Innenseite unmittelbar an die Tretkurbelverbindungswelle angrenzt und eine Nut als Teil der Führung aufweist, die die Form des Schraubenlinienabschnitts hat, und in die eine punktuelle oder schraubenlinienförmige radiale Erhebung (232) der Tretkurbelverbindungswelle eingreift, wobei die Erhebung und die Nut eine Verdrehung zueinander erlauben, die Außenseite der kurzen Hohlwelle den Axialmitnehmer (230) vorsieht und der Axialmitnehmer eine Radiallänge aufweist, die mindestens der Summe aus Dicke der Abtriebhohlwelle (222) und Eingrifftiefe des Axialmitnehmers in die Kupplungsscheibe (240) entspricht, wobei die Kupplungsscheibe zu beiden Axialseiten den Axialmitnehmer begrenzt und die Kupplungsscheibe in jeder Axialposition über sich in Axialrichtung erstreckende Stäbe (244) mit der Abtriebhohlwelle (248) oder mit einem Kettenrad (220, 220'. 241) des Abtriebverbindungselements drehfest und axial verschiebbar verbunden ist, wobei sich die Stäbe (244) auf einer Seite der Kupplungsscheibe erstrecken und auf der dazu entgegengesetzten Seite die Kupplungsscheibe die erste Formschlusselementanordnung in Form von kugelabschnittförmigen Erhebungen (249) aufweist, zu denen komplementär jeweilige Vertiefungen als die zweite Formschlusselementeanordnung vorgesehen sind, die formschlüssig ineinander greifen, wenn eine Axialposition erreicht wird, die bei einer Drehung der Tretkurbelverbindungswelle entgegen einer Antriebsrichtung auftritt, und die bei einer Axialposition, wie sie bei Drehung der Tretkurbelverbindungswelle in Antriebsrichtung auftritt, voneinander getrennt sind.

7. Rücktrittgetriebe nach Anspruch 5 oder 6, wobei die Abtriebhohlwelle in ihrer Längserstreckung in der Höhe des Fensters in zwei Abtriebhohlwellenstücke (222'; 222") zweigeteilt ist, wobei zumindest ein Ende der zwei Abtriebhohlwellenstücke eine umfänglich und axial begrenzte Längsausnehmung aufweist, die das Fenster (224) bildet.

8. Verfahren zur gesteuerten Kopplung von Abtrieb und Motor eines Elektrofahrrads, wobei der Motor (50) von dem Abtrieb (20, 22) mechanisch abgekuppelt wird, wenn eine Tretkurbel (12) des Elektrofahrrads entgegen der Antriebsrichtung betätigt wird, mit den Schritten: Vorsehen eines Gewindetriebs (30) in drehmomentübertragender Verbindung mit dem Abtrieb und der Tretkurbel und Beaufschlagen des Gewindetriebs mit einer Drehmomentdifferenz zwischen dem Abtrieb (22) und der Tretkurbel (12); Umsetzen des Drehsinns der Drehmomentdifferenz in unterschiedliche Axialpositionen bei unterschiedlichen Drehsinnen durch Führen des Gewindetriebs mit einer schraubenlinienabschnittförmigen Führung, deren Achse der Drehachse der Drehmomentdifferenz entspricht; und Ansteuern eines Kupplungselements (40) durch Übertragen der Axialposition, die sich durch den Drehsinn der Drehmomentdifferenz ergibt, von dem Gewindetrieb (30) auf das Kupplungselement (40), wobei das Kupplungselement den Abtrieb und den Motor steuerbar verbindet und bei einem Drehsinn der Drehmomentdifferenz, der einer Betätigung der Tretkurbel entgegen der Antriebsrichtung entspricht, das Kupplungselement den Motor von dem Abtrieb aufgrund der von dem Gewindetrieb vorgesehenen und an das Kupplungselement übertragenen Axialposition trennt.

9. Verfahren nach Anspruch 8, wobei der Drehsinn der Drehmomentdifferenz umgesetzt wird durch die Führung, indem mindestens ein Mitnehmer (130) in eine zumindest an einem Ende abgeschlossenen Nut (134) eingreift und in dieser geführt wird, wobei eine Betätigung der Tretkurbel auf einen damit stoffschlüssig oder formschlüssig verbundenen Tretkurbelaufsatz übertragen wird, die Betätigung vom Tretkurbelaufsatz über die Führung an eine Innenseite eines axial verschiebbar gelagerten Kettenrads (120) übertragen wird, das mit dem Abtrieb verbunden ist, und aufgrund der schraubenlinienabschnittförmigen mindestens einen Nut (134), in die jeweils ein Mitnehmer (130) eingreift, bei Betätigen der Kurbel in Antriebsrichtung das Kettenrad aufgrund der schraubenlinienabschnittförmigen Nut eine andere Axialposition aufweist als bei Betätigen der Kurbel entgegen der Antriebsrichtung, und ein von dem Motor angetriebenes Radelement (150) bei der Axialposition, die bei Betätigen der Tretkurbel in Antriebsrichtung von dem Kettenrad eingenommen wird, das Radelement drehmomentübertragend mit dem Kettenrad verbunden ist, und bei Übergang in die andere Axialposition, die bei entgegengesetzter Betätigung der Tretkurbel auftritt, das Kettenrad axial von dem Radelement weg bewegt wird und dadurch der Motor von dem Abtrieb getrennt wird.

10. Verfahren nach Anspruch 8, wobei der Drehsinn der Drehmomentdifferenz umgesetzt wird durch die Führung, indem ein Ringelement (134), das auf einer mit der Tretkurbel verbundenen Tretkurbelverbindungswelle (260) angeordnet ist, über die schraubenlinienabschnittförmige Führung mit der Tretkurbelverbindungswelle verbunden ist, und eine mit dem Abtrieb verbundene Abtriebhohlwelle (222), die das Ringelement sowie die Tretkurbelverbindungswelle umgreift, ein Axialmitnehmer (234), der mit dem Ringelement (230) verbunden ist, durch Ausüben einer Tangentialkraft auf den Axialmitnehmer das Ringelement gegenüber der Tretkurbelverbindungswelle dreht, wenn Drehmomente mit unterschiedlichem Drehsinn von der Tretkurbel (212a,b) an die Abtriebhohlwelle (222) übertragen werden, wobei die Drehung aufgrund der schraubenlinienabschnittförmigen Führung das Ringelement (230) und den Axialmitnehmer (234) zwischen den unterschiedlichen Axialpositionen axial verschiebt; und eine Kupplungsscheibe (240), die ein von dem Motor angetriebenes Radelement (252) mit dem Abtrieb steuerbar verbindet, und die von dem Axialmitnehmer durch das axiale Verschieben angesteuert wird und die Kupplungsscheibe (240) das von dem Motor angetriebene Radelement von dem Abtrieb trennt, wenn der Axialmitnehmer eine Axialposition einnimmt, die bei Betätigen der Tretkurbel (212a,b) entgegen der Antriebsrichtung auftritt.

## Claims

1. Back-pedal gear for electric bicycles, wherein the back-pedal gear comprises a motor connection shaft (52) suitable for attachment to an electric motor, a pedal crank connection shaft (10) suitable for attachment to a pedal crank, and a drive output connection element (20) suitable for connection to a road wheel, **characterized in that** the back-pedal gear also has a screw drive (30) which is attached between pedal crank connection shaft (10) and drive output connection element (20), wherein the screw drive (30) has a guide in the form of a helical section with a constant or variable pitch and is designed such that, owing to the helical form, it provides different axial positions in the case of opposite torques acting between pedal crank connection shaft (10) and drive output connection element (20), wherein the back-pedal gear also has a clutch element (40) which connects the motor connection shaft (52) to the drive output connection element (20) in switchable fashion, wherein the clutch element (40) is connected in axial-force-transmitting fashion to the screw drive by means of which axial positions are switched, and said clutch element is designed so as to separate the motor connection shaft (52) from the drive output connection element (20) if a negative torque acts between pedal crank connection shaft (10) and drive output connection element (20), such as arises in the event of a rotation of the pedal crank connection shaft counter to the pedal drive direction.

2. Back-pedal gear according to Claim 1, wherein the guide of the screw drive has at least one groove (134) in the form of a helical section and has a driver (130) that engages therein, the drive output connection element is provided by a sprocket (120), and a pedal crank attachment (114) is arranged on and connected to the pedal crank connection shaft, wherein the guide is provided on two opposite cylindrical surfaces, wherein a first surface, pointing toward the pedal crank, of the cylindrical surfaces is formed on a cylindrical inner side (132) of the sprocket, and a second surface, pointing away from the pedal crank (112), of the cylinder surfaces is formed on a cylindrical outer side (116) of the pedal crank attachment, wherein the clutch element has a first and, complementary thereto, a second positive-locking element arrangement (140; 142) which can be placed in engagement with one another and released from one another, wherein the first positive-locking element arrangement (140) is provided on the sprocket (120) or on a drive-output-side wheel element fixedly connected to said sprocket, and the second positive-locking element arrangement (142) is provided on a motor-side wheel element (150) which is connected to the motor connection shaft, wherein the helical form of the guide is designed such that, in the event of a reversal of the direction of rotation of the pedal crank connection shaft, it generates an axial stroke as a difference between the axial positions, said axial stroke being sufficient to release and close the clutch element.

3. Back-pedal gear according to Claim 2, wherein the guide has multiple circumferentially distributed grooves (134) which each have an end which is closed by a substantially axially running side wall and an opposite end which is open in the axial direction; the guide also has, for each groove (134), a driver (130) which is movable in the groove and which extends radially into the groove proceeding from the pedal crank attachment, and the back-pedal gear also has an axial delimitation stop which limits the axial movement of the sprocket toward the side at which the open end of the grooves is open, the grooves are provided in uniformly distributed fashion in the cylindrical inner side of the sprocket, and the back-pedal gear also comprises a spring (170) which presses in the axial direction against that side of the sprocket at which the open end is situated.

4. Back-pedal gear according to Claim 2 or 3, also comprising the pedal crank (112), wherein the pedal crank and the pedal crank attachment are formed in one piece and connected to one end of the pedal crank shaft by way of a positively locking connection.

5. Back-pedal gear according to Claim 1, wherein the screw drive has a ring element (230) which is arranged, by means of the guide, on the pedal crank connection shaft, the ring element (230) has at least one radially extending axial driver (234) which extends radially away from the ring element (230); the drive output connection element is in the form of a drive output hollow shaft (222) in which the pedal crank connection shaft (260) extends coaxially; in the drive output hollow shaft (222) there is provided an axially and circumferentially delimited window (224) through which the axial driver extends, wherein the axial dimension of the window is larger, by a predetermined difference between the axial positions, than the axial extent of the axial driver (234); wherein the clutch element has a clutch disc (240) which is mounted in axially displaceable fashion on the drive hollow shaft and which is connected rotationally conjointly to the latter and into which the axial driver (234) engages; the clutch element also has a first (249) and, complementary thereto, a second positive-locking element arrangement, wherein the first positive-locking element arrangement (249) is provided on or connected to the clutch disc (240), and the second positive-locking element arrangement is provided on a motor-side wheel element (252) which is fixedly connected to the motor connection shaft; and wherein the pitch of the helical form of the guide and the axial dimension of the window (224) are designed such that, in the event of a reversal of the direction of rotation of the pedal crank connection shaft, they generate an axial stroke as the difference between the axial positions, said axial stroke being sufficient to place the positive-locking element arrangements into engagement with one another and release the same.

6. Back-pedal gear according to Claim 5, wherein the ring element (230) is in the form of a short hollow shaft, the inner side of which directly adjoins the pedal crank connection shaft and has a groove as part of the guide, which groove has the form of the helical section and into which groove a punctiform or helically shaped radial elevation (232) of the pedal crank connection shaft engages, wherein the elevation and the groove permit a rotation relative to one another, the outer side of the short hollow shaft provides the axial driver (230), and the axial driver has a radial length which corresponds at least to the sum of the thickness of the drive output hollow shaft (222) and engagement depth of the axial driver into the clutch disc (240), wherein the clutch disc delimits the axial driver to both axial sides, and the clutch disc is, in all axial positions, connected rotationally conjointly and in an axially displaceable manner to the drive output hollow shaft (248), or to a sprocket (220, 220', 241) of the drive output connection element, by way of bars (244) extending in the axial direction, wherein the bars (244) extend on one side of the clutch disc and, on the opposite side, the clutch disc has the first positive-locking element arrangement in the form of spherical-segment-shaped elevations (249), with respective depressions complementary to said elevations being provided as the second positive-locking element arrangement, said elevations and depressions engaging into one another in positively locking fashion in the case of an axial position assumed in the event of a rotation of the pedal crank connection shaft counter to a drive direction, and being separated from one another in the case of an axial position assumed in the event of rotation of the pedal crank connection shaft in the drive direction.

7. Back-pedal gear according to Claim 5 or 6, wherein the drive output hollow shaft is, in its longitudinal extent in the direction of the height of the window, divided into two drive output hollow shaft parts (222'; 222"), wherein at least one end of the two drive output hollow shaft parts has a circumferentially and axially delimited longitudinal recess which forms the window (224).

8. Method for the controlled coupling of the drive output and motor of an electric bicycle, wherein the motor (50) is mechanically decoupled from the drive output (20, 22) when a pedal crank (12) of the electric bicycle is actuated counter to the drive direction, having the steps: providing a screw drive (30) in torque-transmitting connection with the drive output and the pedal crank, and subjecting the screw drive to a torque difference between the drive output (22) and the pedal crank (12); converting the direction of rotation of the torque difference into different axial positions in the case of different directions of rotation by guidance of the screw drive by way of a helical-section-shaped guide, the axis of which corresponds to the axis of rotation of the torque difference; and activating a clutch element (40) by transmitting from the screw drive (30) to the clutch element (40) the axial position arising from the direction of rotation of the torque difference, wherein the clutch element connects the drive output and the motor in controllable fashion and, if a direction of rotation of the torque difference corresponds to an actuation of the pedal crank counter to the drive direction, the clutch element separates the motor from the drive output based on the axial position provided by the screw drive and transmitted to the clutch element.

9. Method according to Claim 8, wherein the direction of rotation of the torque difference is converted by the guide by virtue of at least one driver (130) engaging into a groove (134) which is closed off at least at one end and being guided in said groove, wherein an actuation of the pedal crank is transmitted to a pedal crank attachment which is connected cohesively or in positively locking fashion to said pedal crank, the actuation is transmitted by the pedal crank attachment via the guide to an inner side of an axially displaceably mounted sprocket (120) which is connected to the drive output, and owing to the at least one helical-section-shaped groove (134) into which in each case one driver (130) engages, the sprocket is, owing to the helical-section-shaped groove, in a different axial position in the event of actuation of the crank in the drive direction than in the event of actuation of the crank counter to the drive direction, and, in the axial position assumed by the sprocket in the event of actuation of the pedal crank in the drive direction, a wheel element (150) which is driven by the motor is connected in torque-transmitting fashion to the sprocket, and in the event of transfer into the other axial position, such as arises in the event of opposite actuation of the pedal crank, the sprocket is moved away from the wheel element and the motor is thereby separated from the drive output.

10. Method according to Claim 8, wherein the direction of rotation of the torque difference is converted by the guide by virtue of a ring element (134) which is arranged on a pedal crank connection shaft (260) connected to the pedal crank being connected to the pedal crank connection shaft via the helical-section-shaped guide, and a drive output hollow shaft (222), which is connected to the drive output and which engages around the ring element and the pedal crank connection shaft, an axial driver (234), which is connected to the ring element (230), rotates the ring element relative to the pedal crank connection shaft by exerting a tangential force on the axial driver if torques with a different direction of rotation than the pedal crank (212a,b) are transmitted to the drive output hollow shaft (222), wherein, owing to the helical-section-shaped guide, the rotation displaces the ring element (230) and the axial driver (234) axially between the different axial positions; and a clutch disc (240) which controllably connects a wheel element (252), which is driven by the motor, to the drive output, which clutch disc is activated by the axial driver as a result of the axial displacement, and the clutch disc (240) separates the wheel element, which is driven by the motor, from the drive output when the axial driver assumes an axial position such as arises in the event of actuation of the pedal crank (212a,b) counter to the drive direction.

## Revendications

1. Boîte de vitesses à retour pour vélos électriques, la boîte de vitesses à retour comprenant un arbre de liaison au moteur (52) approprié pour être raccordé à un moteur électrique, un arbre de liaison à une manivelle de pédalier (10) approprié pour être raccordé à une manivelle de pédalier et un élément de liaison à une prise de force (20) approprié pour être raccordé à un rotor, **caractérisée en ce que** la boîte de vitesses à retour comprend en outre un mécanisme d'entraînement à vis (30) qui est raccordé entre l'arbre de liaison à la manivelle de pédalier (10) et l'élément de liaison à la prise de force (20), le mécanisme d'entraînement à vis (30) présentant un guidage sous la forme d'une portion hélicoïdale de hauteur de pas constante ou variable, et étant prévu, dans le cas de couples opposés entre l'arbre de liaison à la manivelle de pédalier (10) et l'élément de liaison à la prise de force (20), pour prévoir des positions axiales différentes sur la base de la forme hélicoïdale, la boîte de vitesses à retour présentant en outre un élément d'embrayage (40) qui relie l'arbre de liaison au moteur (52) de manière commutable à l'élément de liaison à la prise de force (20), l'élément d'embrayage (40) étant connecté au mécanisme d'entraînement à vis en transmettant les forces axiales, par le biais desquelles les positions axiales sont commutées, et étant prévu, dans le cas d'un couple négatif entre l'arbre de liaison à la manivelle de pédalier (10) et l'élément de liaison à la prise de force (20), qui se produit lors de la rotation de l'arbre de liaison à la manivelle de pédalier dans le sens inverse du sens de l'entraînement à pédales, pour séparer l'arbre de liaison au moteur (52) de l'élément de liaison à la prise de force (20).

2. Boîte de vitesses à retour selon la revendication 1, dans laquelle le guidage du mécanisme d'entraînement à vis présente au moins une rainure (134) en forme de portion hélicoïdale et un dispositif d'entraînement (130) venant en prise dans celle-ci, l'élément de liaison à la prise de force est prévu par un plateau (120), et sur l'arbre de liaison à la manivelle de pédalier est disposée une pièce rapportée de pédalier (114) connectée à celui-ci, le guidage étant prévu sur deux surfaces cylindriques opposées, une première surface des surfaces cylindriques tournée vers la manivelle de pédalier étant réalisée au niveau d'un côté interne cylindrique (132) du plateau, et une deuxième surface des surfaces cylindriques tournée à l'opposé de la manivelle de pédalier (112) étant réalisée sur un côté extérieur cylindrique (116) de la pièce rapportée de pédalier, l'élément d'embrayage présentant un premier et un deuxième agencement complémentaire à celui-ci d'éléments à engagement positif (140 ; 142) qui peuvent être amenés en prise l'un avec l'autre et détachés l'un de l'autre, le premier agencement d'éléments à engagement positif (140) étant prévu sur le plateau (120) ou sur un élément de roue du côté de la prise de force connecté fixement à celui-ci et le deuxième agencement d'éléments à engagement positif (142) étant prévu sur un élément de roue (150) du côté du moteur, lequel est connecté à l'arbre de liaison au moteur, la forme hélicoïdale du guidage étant réalisée, dans le cas d'une inversion du sens de rotation de l'arbre de liaison à la manivelle de pédalier, pour effectuer une course axiale correspondant à une différence entre les positions axiales, laquelle suffit pour libérer et fermer l'élément d'embrayage.

3. Boîte de vitesses à retour selon la revendication 2, dans laquelle le guidage présente plusieurs rainures (134) réparties sur la périphérie, lesquelles présentent chacune une extrémité qui est fermée par une paroi latérale s'étendant essentiellement axialement, et présentent une extrémité opposée qui est ouverte dans la direction axiale ; le guidage présente en outre pour chaque rainure (134) un dispositif d'entraînement (130) déplaçable dans la rainure, lequel s'étend radialement à l'écart à partir de la pièce rapportée de pédalier et à l'intérieur de la rainure, la boîte de vitesses à retour présente en outre une butée de limitation axiale qui limite le mouvement axial du plateau vers le côté vers lequel l'extrémité ouverte des rainures est ouverte, les rainures sont réparties uniformément dans le côté interne cylindrique du plateau et la boîte de vitesses à retour comprend en outre un ressort (170) qui presse dans la direction axiale sur le côté du plateau sur lequel se trouve l'extrémité ouverte.

4. Boîte de vitesses à retour selon la revendication 2 ou 3, comprenant en outre la manivelle de pédalier (112), la manivelle de pédalier et la pièce rapportée de pédalier étant réalisées d'une seule pièce et étant connectées à une extrémité de l'arbre de manivelle de pédalier par le biais d'une connexion positive à celui-ci.

5. Boîte de vitesses à retour selon la revendication 1, dans laquelle le mécanisme d'entraînement à vis présente un élément annulaire (230) qui est disposé par le biais du guidage sur l'arbre de liaison à la manivelle de pédalier, l'élément annulaire (230) présente au moins un dispositif d'entraînement axial (234) s'étendant radialement qui s'étend radialement à l'écart de l'élément annulaire (230) ; l'élément de liaison à la prise de force est réalisé sous forme d'arbre creux de prise de force (222) dans lequel s'étend coaxialement l'arbre de liaison à la manivelle de pédalier (260) ; dans l'arbre creux de prise de force (222) est prévue une fenêtre limitée axialement et sur la périphérie (224), à travers laquelle s'étend le dispositif d'entraînement axial, la dimension axiale de la fenêtre étant plus grande, d'une différence prédéterminée entre les positions axiales, que l'étendue axiale du dispositif d'entraînement axial (234) ; l'élément d'embrayage présentant un disque d'embrayage (240) qui est monté de manière déplaçable axialement sur l'arbre creux d'entraînement et qui est connecté de manière solidaire en rotation à celui-ci, et dans lequel vient en prise le dispositif d'entraînement axial (234) ; l'élément d'embrayage présente en outre un premier (249) et un deuxième agencement d'éléments à engagement positif complémentaire à celui-ci, le premier agencement d'éléments à engagement positif (249) étant prévu sur le disque d'embrayage (240) ou étant connecté à celui-ci, et le deuxième agencement d'éléments à engagement positif étant prévu sur un élément de roue (252) du côté du moteur, lequel est connecté fixement à l'arbre de liaison au moteur ; et la hauteur de pas de la forme hélicoïdale du guidage et la dimension axiale de la fenêtre (224) étant réalisées, dans le cas d'une inversion du sens de rotation de l'arbre de liaison à la manivelle de pédalier, pour effectuer une course axiale correspondant à la différence entre les positions axiales, laquelle suffit pour amener en prise l'un avec l'autre les agencements d'éléments à engagement positif et pour les libérer l'un de l'autre.

6. Boîte de vitesses à retour selon la revendication 5, dans laquelle l'élément annulaire (230) est réalisé sous forme d'arbre creux court, dont le côté interne est immédiatement adjacent à l'arbre de liaison à la manivelle de pédalier et présente une rainure en tant que partie du guidage, laquelle a la forme de la portion hélicoïdale et dans laquelle vient en prise un rehaussement radial ponctuel ou hélicoïdal (232) de l'arbre de liaison à la manivelle de pédalier, le rehaussement et la rainure pouvant tourner l'un par rapport à l'autre, le côté extérieur de l'arbre creux court présentant le dispositif d'entraînement axial (230) et le dispositif d'entraînement axial présentant une longueur radiale qui correspond au moins à la somme de l'épaisseur de l'arbre creux de prise de force (222) et de la profondeur d'engagement du dispositif d'entraînement axial dans le disque d'embrayage (240), le disque d'embrayage limitant des deux côtés axiaux le dispositif d'entraînement axial, et le disque d'embrayage, dans chaque position axiale, étant connecté de manière solidaire en rotation et déplaçable axialement, par le biais de barres (244) s'étendant dans la direction axiale, à l'arbre creux de prise de force (248) ou à un plateau (220, 220' ; 241) de l'élément de liaison à la prise de force, les barres (244) s'étendant sur un côté du disque d'embrayage, et, sur le côté opposé, le disque d'embrayage présentant le premier agencement d'éléments à engagement positif sous la forme de rehaussements de forme tronconique (249), des renfoncements respectivement complémentaires à ceux-ci étant prévus en tant que deuxième agencement d'éléments à engagement positif, qui viennent en prise par engagement positif les uns dans les autres lorsqu'une position axiale est obtenue, laquelle se produit lors d'une rotation de l'arbre de liaison à la manivelle de pédalier dans le sens opposé à un sens de l'entraînement, et qui sont séparés les uns des autres dans le cas d'une position axiale telle qu'elle se produit lors de la rotation de l'arbre de liaison à la manivelle de pédalier dans le sens de l'entraînement.

7. Boîte de vitesses à retour selon la revendication 5 ou 6, dans laquelle l'arbre creux de prise de force est dïvisé en deux dans son étendue longitudinale dans la hauteur de la fenêtre en deux parties d'arbre creux de prise de force (222' ; 222"), au moins une extrémité des deux parties d'arbre creux de prise de force présentant un évidement longitudinal limité axialement et sur la périphérie, lequel forme la fenêtre (224).

8. Procédé d'accouplement commandé de la prise de force et du moteur d'un vélo électrique, le moteur (50) étant mécaniquement désaccouplé de la prise de force (20, 22) lorsqu'une manivelle de pédalier (12) du vélo électrique est actionnée dans le sens opposé au sens de l'entraînement, le procédé comprenant les étapes suivantes : fourniture d'un mécanisme d'entraînement à vis (30) en liaison de transmission de couple avec la prise de force et la manivelle de pédalier et sollicitation du mécanisme d'entraînement à vis avec une différence de couple entre la prise de force (22) et la manivelle de pédalier (12) ; inversion du sens de rotation de la différence de couple dans différentes positions axiales dans le cas de différents sens de rotation par guidage du mécanisme d'entraînement à vis avec un guidage en forme de portion hélicoïdale, dont l'axe correspond à l'axe de rotation de la différence de couple ; et commande d'un élément d'embrayage (40) par transfert de la position axiale, qui s'obtient par le sens de rotation de la différence de couple, du mécanisme d'entraînement à vis (30) à l'élément d'embrayage (40), l'élément d'embrayage reliant la prise de force et le moteur de manière commandable et, dans le cas d'un sens de rotation de la différence de couple qui correspond à un actionnement de la manivelle de pédalier dans le sens opposé au sens de l'entraînement, l'élément d'embrayage séparant le moteur de la prise de force sur la base de la position axiale prévue par le mécanisme d'entraînement à vis et transmise à l'élément d'embrayage.

9. Procédé selon la revendication 8, dans lequel le sens de rotation de la différence de couple est inversé par le guidage, en ce qu'au moins un dispositif d'entraînement (130) vient en prise dans une rainure (134) fermée au moins à une extrémité et est guidé dans celle-ci, un actionnement de la manivelle de pédalier étant transmis à une pièce rapportée de pédalier connectée à celle-ci par liaison de matière ou par engagement positif, l'actionnement de la pièce rapportée de pédalier étant transmis par le biais du guidage à un côté interne d'un plateau (120) monté de manière déplaçable axialement, lequel est connecté à la prise de force, et du fait de l'au moins une rainure (134) en forme de portion hélicoïdale, dans laquelle vient à chaque fois en prise un dispositif d'entraînement (130), dans le cas de l'actionnement de la manivelle dans le sens de l'entraînement, le plateau présentant, du fait de la rainure en forme de portion hélicoïdale, une autre position axiale que dans le cas de l'actionnement de la manivelle dans le sens opposé au sens de l'entraînement, et un élément de roue (150) entraîné par le moteur, dans le cas de la position axiale adoptée par la plateau lors de l'actionnement de la manivelle de pédalier dans le sens de l'entraînement, étant connecté au plateau en transmettant le couple à l'élément de roue, et dans le cas d'un transfert dans l'autre position axiale qui se produit lors d'un actionnement dans le sens inverse de la manivelle de pédalier, le plateau étant déplacé axialement à l'écart de l'élément de roue et de ce fait le moteur étant séparé de la prise de force.

10. Procédé selon la revendication 8, dans lequel le sens de rotation de la différence de couple est inversé par le guidage, en ce qu'un élément annulaire (134), qui est disposé sur un arbre de liaison à la manivelle de pédalier (260) connecté à la manivelle de pédalier, est connecté à l'arbre de liaison à la manivelle de pédalier par le biais du guidage en forme de portion hélicoïdale, et un arbre creux de prise de force (222) connecté à la prise de force, qui vient en prise autour de l'élément annulaire ainsi que de l'arbre de liaison à la manivelle de pédalier, un dispositif d'entraînement axial (234), qui est connecté à l'élément annulaire (230), en exerçant une force tangentielle sur le dispositif d'entraînement axial, fait tourner l'élément annulaire par rapport à l'arbre de liaison à la manivelle de pédalier, lorsque des couples sont transmis avec un sens de rotation différent de la manivelle de pédalier (212a,b) à l'arbre creux de prise de force (222), la rotation déplaçant axialement, sur la base du guidage en forme de portion hélicoïdale, l'élément annulaire (230) et le dispositif d'entraînement axial (234) entre les positions axiales différentes ; et un disque d'embrayage (240) qui relie de manière commandable un élément de roue (252) entraîné par le moteur à la prise de force, et qui est commandé par le déplacement axial par le dispositif d'entraînement axial, et le disque d'embrayage (240) séparant l'élément de roue entraîné par le moteur de la prise de force lorsque le dispositif d'entraînement axial adopte une position axiale qui se produit dans le cas d'un actionnement de la manivelle de pédalier (212a,b) dans le sens opposé au sens de l'entraînement.
